(19) **Europäisches Patentamt**
**European Patent Office**
**Office européen des brevets**

(11) Publication number : **0 347 954 B1**

(12) # EUROPEAN PATENT SPECIFICATION

(45) Date of publication of patent specification :
09.09.92 Bulletin 92/37

(51) Int. Cl.⁵ : **A01J 5/04,** A01J 5/06,
A01J 5/08, A01K 1/12

(21) Application number : **89116114.3**

(22) Date of filing : **17.07.86**

(54) **An implement for milking animals, such as cows.**

(30) Priority : **19.07.85 NL 8502082**
**19.07.85 NL 8502083**

(43) Date of publication of application :
**27.12.89 Bulletin 89/52**

(45) Publication of the grant of the patent :
**09.09.92 Bulletin 92/37**

(84) Designated Contracting States :
**DE FR GB NL SE**

(56) References cited :
**EP-A- 0 091 892**
**WO-A-85/02973**
**DD-A- 82 592**
**GB-A- 496 767**
**GB-A- 918 766**
**GB-A- 978 384**

(56) References cited :
**US-A- 4 483 272**
**SOVIET INVENTIONS ILLUSTRATED, week C08, published 02-04-1980, Derwent Publications Ltd.; & SU-A-667189 (FOMIN LU)20-06-1979**

(60) Publication number of the earlier application in accordance with Art. 76 EPC : **0 209 205**

(73) Proprietor : **C. van der Lely N.V.**
**Weverskade 10 P.O. Box 26**
**NL-3155 ZG Maasland (NL)**

(72) Inventor : **van der Lely, Cornelis**
**7 Brüschenrain**
**Zug (CH)**

(74) Representative : **Mulder, Herman et al**
**Octrooibureau Van der Lely N.V. Weverskade 10 P.O. Box 26**
**NL-3155 ZG Maasland (NL)**

EP 0 347 954 B1

## Description

The invention relates to a milking implement for animals, such as cows, comprising teat cups, each of which being provided with a milk conduit, whereby the connection point between a milk conduit and a teat cup is arranged at approximately the same height as where the lower end of the teat in the teat cup is located during the milking operation and whereby the end of the conduit leads away substantially horizontally from the teat cup.

The teat cups usually consist of a rigid tubular part, housing the teat holder which consists of a flexible, tubular part. The teat holder debouches downwardly into the milk conduit through which the milk is discharged. Teat cups with downwardly directed milk conduits require a relatively large available space under the animal. This can be harmful, especially when the teat cups are attached for a longer period of time, during which the animals have a fair degree of room to move, i.e. to walk, stand or lie. For this reason it is favourable when the teat cups can be restricted in height. However, such an implement in accordance with the prior art portion of claim 1 is already known from the GB-A-918 766. In the implement described in said patent specification the position of the teat cups relative to an udder harness is fixed, so that the position of the teat cups cannot be adapted sufficiently to the form of the udder of the animal to be milked. The invention has for its object to provide a milking implement, whereby an efficient connection of the teat cups to the teats of an animal, greatly, independent of the form of the udder, is obtained.

According to the invention, the teat cups are movable relative to at least one substantially vertical axis through a central portion and pivotably connected to said central portion which central portion is situated substantially between the teat cups. A movability of the teat cups relative to a horizontal holder is described in SU-A-667 189 (Soviet inventions illustrated", week C08, published 02-04-1980); however, therein the teat cups are not movable in a horizontal plane but rotatable by means of ball joints, which limit the adjustment of the teat cups, specifically when the relative position of the teats differs greatly. The possibility of a pivoting movement of teat cups about a vertical axis is known per se from WO 85/02973, page 6, lines 29 to 32. However, from this passage it is not clear how to realise in that case an adjustment of the teat cups in a horizontal plane. In a preferable embodiment according to the invention, each teat cup may be connected to the central portion by means of three pivots rotatable about an axle, erected substantially in an upward direction, and two arms being arranged between the three pivots. To ensure an uninterrupted and reliable attachment of the teat cups to the udder of an animal, the teat cups may be connected, in accordance with the invention, to a central portion which may be attached to the animal by means of a carrying member. Thereby, preferably, the teat cups may be encompassed by.an envelope that can be placed around the udder of the animal.

According to a further characteristic of the invention, the diameter of the teat cup may amount to at least half the length (height) of the teat cup, which relatively short length of the teat cup contributes towards a dependable attachment to the udder, among other things because a compact construction of the milking cluster can be obtained.

Furthermore, according to the invention, a teat cup may be lined on the interior side with a flexible substance, e.g. rubber or synthetic material, said lining being provided on the interior side with one or more upwardly directed lamellae. These upwardly directed lamellae contribute towards a proper lock of the teat holder around the animal's teat, said lamellae being in particular conducive to avoiding suction of air along the teats at a point of time when an under-pressure prevails in the milk hose. In case of an excess pressure in the milk hose, air may escape between the lamellae and the teat, which may be desirable during drying, after cleaning of the teat.

According to a further characteristic of the invention, the upper part of a teat cup may consist of a flexible substance, said upper part being provided with an upper rim which has an a-symmetric shape, adapted to the shape of the udder and is higher on one side than on the other. Said upper rim, adapted to the shape of the udder, may consist of a profile which corresponds with an average shape of an udder, obviously offering a sufficient flexibility for ensuring a proper attachment in case of shapes which differ somewhat. On the other hand, it is also possible to provide the teat cup with an upper rim which has been specifically adapted to suit a certain animal, whereby it would be possible e.g. to make a selection for each animal from a number of available upper rim profiles.

For a better understanding of the invention and to show how an installation for milking animals may be carried into effect, reference will now be made, by way of example, to the accompanying drawings, in which:

Figure 1 is a schematic plan view of a parlour;

Figure 2 is a lateral view of a milking site with a cow occupying said place, according to the arrows II in Figure 1;

Figure 3 is a partly rear view of a cow in a milking site according to the arrow III in Figure 2;

Figure 4 is a further detailed lateral view according to a part of Figure 2;

Figure 5 is a schematic cross-section of a milking cluster connected to an udder;

Figure 6 is a bottom view of the milking cluster according to Figure 5;

Figure 7 shows a second embodiment of a milking cluster;

Figure 8 is a bottom view of the milking cluster according to Figure 7 and

Figure 9 is a cross-section of a teat cup.

In the various figures, which are only schematic renderings, corresponding components carry similar reference numerals.

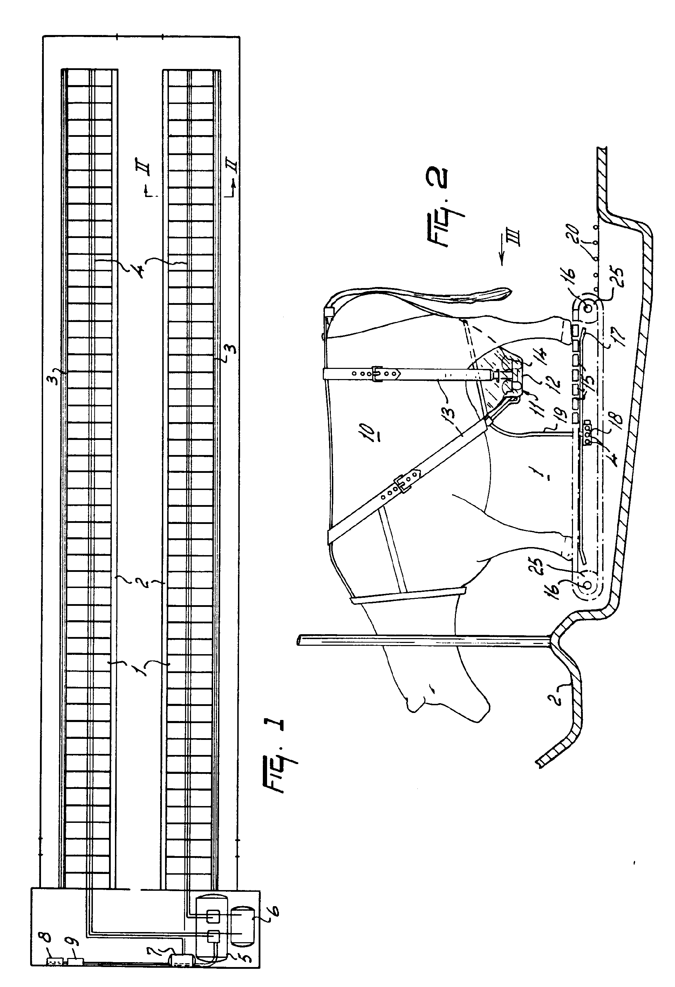

Figure 1 shows a plan view of a parlour which comprises two rows of milking sites 1. The milking sites are provided with a feeding gutter 2 at the front and with a conveyor 3 for discharging manure at the back. In the longitudinal direction of each row of milking sites 1, a set of conduits 4 is arranged underneath the above-mentioned milking sites, said conduits being designed in such a way that an attachment to conduits 4 can be brought about in each milking site. The conduits 4 comprise one or more liquid and/or air pipes. Furthermore, a schematic rendering of a milk tank 5 is given, which also goes for a tank 6 for water, rinsing liquid or cleansing liquid. A tank 7 for compressed air is also rendered. A pump, if at all provided, for bringing about an under-pressure, is not further detailed. The installation may further comprise a computer 8 and control means 9 for an automatic control, check and/or protection of the installation.

Figure 2 shows a cow 10, occupying a milking site. Said cow 10 is provided with a milking cluster 11, which may be permanently connected to the udder of the cow. The milking cluster 11 comprises an envelope 12, made of a transparent synthetic material and attached to the cow by means of straps 13. Contained within the envelope 12 are the teat cups 14, which will be further explained.

The floor of the milking parlour consists of a conveyor with mutually coupled, movable elements 15, linked to one another in the shape of an endless conveyor. The conveyor is provided with two final guiding members 16, about which the elements 15 can move, and with a support 17 to stay the elements 15, constituting the floor of the milking site 1.

The conveyor as described before having been actuated, the elements 15 which constitute the floor of the milking site can move in a rearward direction with regard to the cow, so that the cow is compelled to start walking and defilements, possibly present on the floor, can be discharged in a rearward direction. Near the floor of the milking site a connection box 18 is provided, through which connection box an under-pressure, cleansing or rinsing liquid and/or pre-heated air can be supplied and milk, and possibly other liquids, discharged. For that purpose the necessary conduits 19 are led from the milking cluster 11 to the connection box 18.

Behind the milking site 1 a grating 20 is rendered, allowing the manure and other defilements, if any, to fall through, then to be transported by discharge means, which are not rendered in Figure 2.

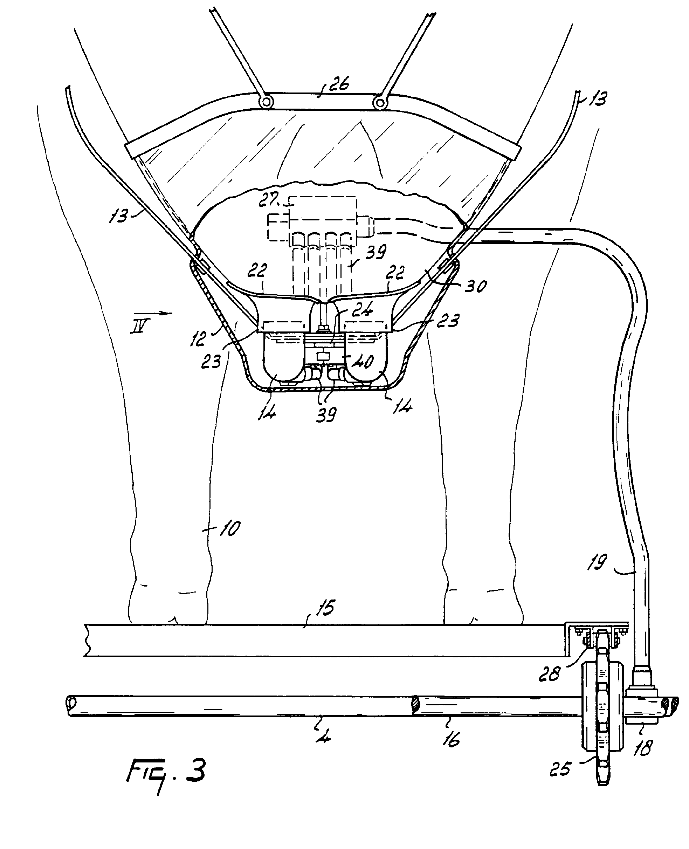

Figure 3 shows a cross-section of the transparent envelope 12, containing four teat cups 14, of which two are visible. The teat cups are provided with a connection, directed forwardly, in view of the necessary conduits. The upper rim 22 of the teat cup is adapted to the shape of the udder, so that a proper attachment to the udder can be obtained. The upper rim 22 is set in the flexible upper part 23 of the teat cup. The straps 13, ensuring the attachment of the milking cluster to the cow, carry both the envelope 12 and a central portion 24, to which the teat cups 14 are connected. Through a flexible conduit 19, containing various pipes, the teat cups are linked with the connection box 18 near the floor of the milking site. The floor of the milking site consists of elements 15, mutually connected and guided around the chain wheels 25, as an endless conveyor. One or more of the chain wheels 25 may be driven by means which are not further defined, such as an electric motor.

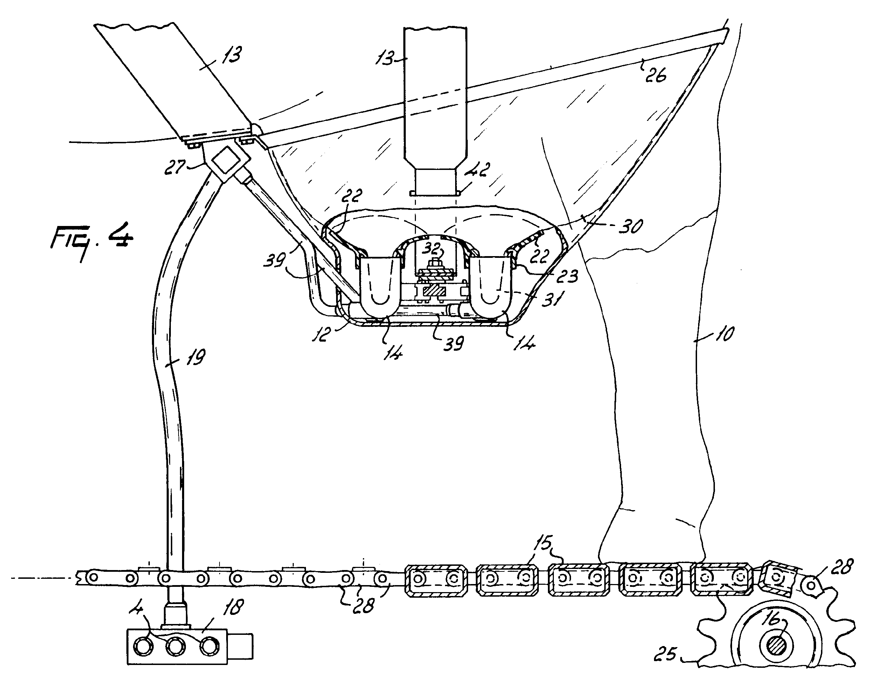

Figure 4 shows, in a way similar to that of Figure 3, the milking cluster in a lateral view. The envelope 12 is provided with a flexible upper rim 26, making it possible to obtain a proper attachment to the udder of the cow. At the front of the envelope 12, a unit 27, attached to one of the straps 13, is rendered. Said unit 27 may comprise a pulsator for achieving a varying air pressure. Furthermore, the unit 27 may comprise the necessary valves and other means for the performance of the milking cluster. A cross-section is given of the elements 15, constituting the floor, said elements consisting of e.g. steel beams with a closed profile and being mutually linked up by means of shackles 28, constituting a chain which engages with the chain wheels 25.

Figure 5 shows in more detail a first embodiment of the milking cluster. It comprises a schematic rendering of the udder 30 with the teats 31 of the cow. The udder 30 is encompassed by the transparent envelope 12 which is attached to the cow by means of a strap 13. Contained within the envelope 12 is a central portion 24, which is also connected to strap 13 by means of a bolt 32. Attached to the central portion 24 are the four teat cups 14, a cross-section of two such cups being provided in Figure 5. The teat cups 14 are provided on the upper side with a flexible top part 23, which may have such a shape that the required attachment to the udder can be obtained. Although the upper part 23 may, because of its flexibility, adapt itself to the shape of the udder, it may be desirable to pre-shape said upper part in such a manner, that a shape is obtained which matches the average size of an udder. In that case the upper part 23 will not have a symmetric shape.

The teat cups 14, rendered in Figure 5, are relatively short, i.e. they have a comparatively small size in height and, accordingly, the teat 31 will extend to the vicinity of the teat cup's lowermost side. Within the teat cup, the teat holder 33 is provided, said holder being integrally connected with the flexible upper part 23 and encompassing the teat when the latter is present in the teat cup. Around the teat holder 33 a chamber 34 is provided, in which a varying air pressure can be brought about via a pulsation conduit, so that the chamber 34 is connected with the pulsator which is not rendered in this Figure. The pulsation hose 35 debouches into the chamber 34 through an aperture 36. Provided in the teat holder 33 are sensors 37, which can detect if the teats occupy a correct position in the teat cup. The sensors 37 are connected by means of electrical conduits 38 to a control unit which is not shown in Figure 5. In the given embodiment said electrical conduits are guided through the pulsation hoses 35.

The milk hoses 39, shown in Figure 5, ensure the discharge of milk and are mounted in a lateral position with regard to the teat cups 14 in such a manner that the total height of the teat cup scarcely exceeds the length of the teat 31. Thus, a compact teat cup can be obtained, its height being less than twice the diameter. Generally speaking, an advantage of such a teat cup is that the parts of the milking cluster do not project downwardly farther than necessary, which reduces the risk of the animal kicking the milking cluster down.

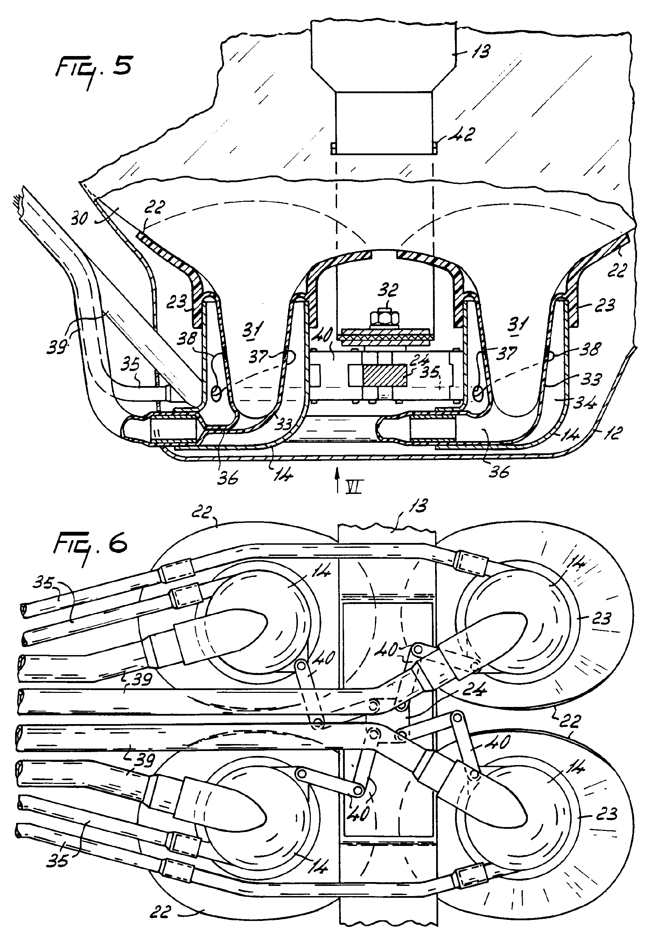

Figure 6 is a schematic bottom view of the milking cluster, shown in Figure 5. Figure 6 renders four milk hoses 39 and four pulsation hoses 35, each of which leads to a teat cup 14. The teat cups 14 are connected, by means of mutually pivotable arms 40, to the central portion that is attached to the strap 13. Accordingly, the teat cups are allowed to move in respect of one another in a substantially level plane, enabled to do so also because the hoses 35 and 39 are sufficiently flexible for that purpose. Therefore, the milking cluster can adapt itself to the position of the teats, which position may vary according to the state or condition of the udder.

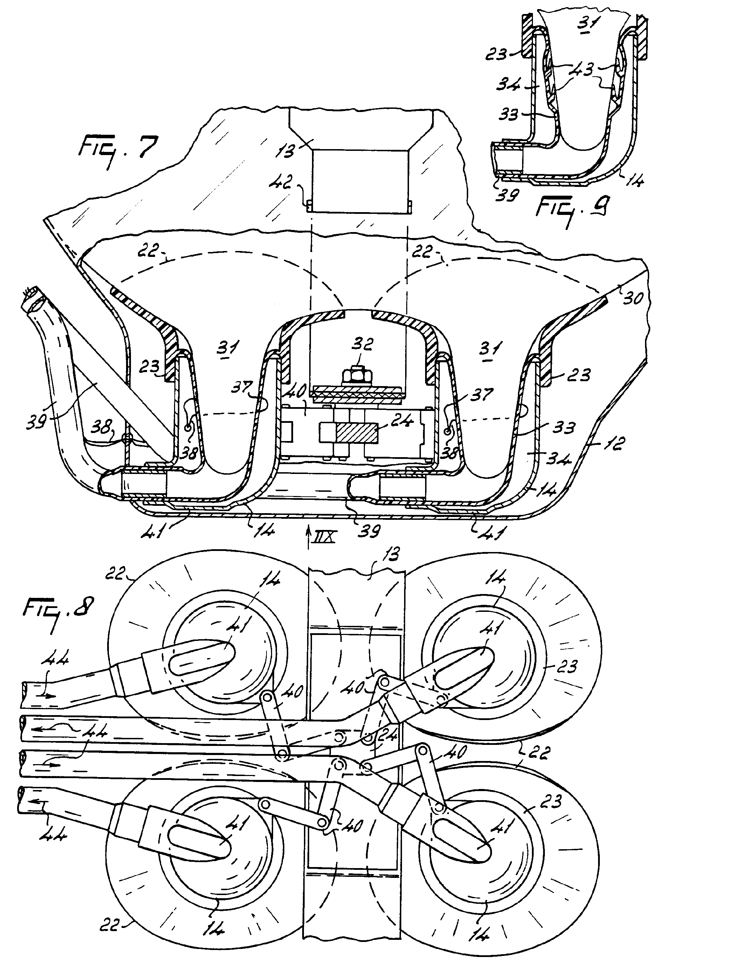

Figure 7 shows a second embodiment, without pulsation hoses being provided. In this embodiment, too, the teat holder 33 is provided with sensors 37, which are capable of observing the presence and/or correct position of the teats in the teat cups. In said embodiment, the chamber 34 around the teat holder is not subjected to a varying air pressure, but may constitute a resilient air cushion, respectively be equipped with a breather opening, so that the atmospheric air pressure is maintained in chamber 34. Through the milk hose 39 a varying pressure is brought about, e.g. a varying sequence of under-pressure and atmospheric pressure. When an under-pressure prevails, milk is sucked from the teat, while during the period that there is no under-pressure there is a massage of the teat, at least a stimulation of the blood circulation. In order to prevent that during the exertion of under-pressure the locking hole of the teat is blocked, because it comes to rest against the lowermost side of the teat holder, the teat cup 14 is provided with an embossment device 41 which prevents the teat cup from shutting off the locking hole.

As is evident from Figure 7, the strap 13, to which the central portion 24 is connected by means of a bolt 32 via a slotted hole 42, traverses the transparent envelope 12, so that both said envelope 12 and the milking cluster are supported.

Figure 8 shows a bottom view of the milking cluster according to Figure 7. From said Figure it is clear that the embossment devices 41 at the lowermost sides of the teat cups 14 have a slightly protracted shape. It is preferable that the low and high pressure in the various teat cups should be brought about in such a way, that two teat cups, situated diagonally in respect of one another, are subjected simultaneously to a low, respectively to a high pressure, as indicated by the arrows 44. A certain upward movement of the milking cluster may result from the varied suction, which may have a positive influence on the milking process.

Figure 9 shows a teat cup which is provided with a teat holder 33 with substantially annular, upwardly directed lamellae 43. These lamellae 43 may lean against the teat and prevent air from being sucked on along the teat in those periods when an under-pressure prevails in the milk hose. Air or liquid is allowed to escape along the teat, however, if a sufficient excess pressure is brought about in the milk hose, e.g. during cleansing or drying of the teat.

The embodiments described are merely examples of the application of any or more characteristics of the invention and, accordingly, the invention should not be considered to be restricted to any embodiment given. In this context it is possible that e.g. the milk hoses 39, shown in the Figures 5 and 7, project downwardly straight from the envelope 12, so that liquid contained by said hoses may flow off in an easier manner.

## Claims

1. A milking implement for animals, such as cows, comprising teat cups (14) each of which being provided with a milk conduit (39), wherein the connection point between a milk conduit (39) and a teat cup (14) is arranged at approximately the same height as where the lower end of the teat (31) in the teat cup (14) is located during the milking operation and wherein the end of the conduit (39) leads away substantially horizontally from the teat cup (14), characterized in that the teat cups (14) are movable relative to at leas one substantially vertical axis through a central portion and pivotably connected to said central portion (24) which central portion is situated substantially between the teat cups (14).

2. A milking implement as claimed in claim 1, characterized in that each teat cup (14) is connected to the central portion (24) by means of three pivots rotatable about an axis, erected substantially in an upward direction, and two arms (40) being arranged between the three pivots.

3. A milking implement as claimed in claim 1 or 2, characterized in that the teat cups (14) are connected to a central portion (24) which may be attached to the animal by means of a carrying member (13).

4. A milking implement as claimed in any one of the preceding claims, characterized in that the teat cups (14) are encompassed by an envelope (12) that can be placed around the udder (30) of the animal.

5. A milking implement as claimed in any one of the preceding claims, characterized in that the diameter of a teat cup (14) amounts to at least half the length (height) of the teat cup (14).

6. A milking implement as claimed in any one of the preceding claims, characterized in that a teat cup (14) on the interior side is lined with a flexible substance (33), e.g. rubber or synthetic material, said lining (33) being provided on the interior side with one or more upwardly directed lamellae (43).

7. A milking implement as claimed in any one of the preceding claims, characterized in that the upper part (23) of a teat cup (14) consists of a flexible substance, said upper part (23) being provided with an upper rim (22) which has an a-symmetric shape, adapted to the shape of the udder (30) and is higher on one side than the other.

**Patentansprüche**

1. Melkvorrichtung für Tiere, beispielsweise Kühe, mit Zitzenbechern (14), von denen jeder mit einer Milchleitung (39) versehen ist, bei der die Verbindungsstelle zwischen einer Milchleitung (39) und einem Zitzenbecher (14) auf etwa gleicher höhe angeordnet ist, in der sich das untere Ende der Zitze (31) in dem Zitzenbecher (14) während des Melkens befindet, und bei der das Ende der Leitung (39) im wesentlichen horizontal von dem Zitzenbecher (14) weggeführt ist, dadurch gekennzeichnet, daß die Zitzenbecher (14) relativ zu mindestens einer im wesentlichen vertikalen, durch ein zentrales Teil gehenden Achse bewegbar und mit dem zentralen Teil (24) schwenkbar verbunden sind, und daß sich das zentrale Teil im wesentlichen zwischen den Zitzenbechern (14) befindet.

2. Melkvorrichtung nach Anspruch 1, dadurch gekennzeichnet, daß jeder Zitzenbecher (14) mit dem zentralen Teil (24) mittels dreier Gelenke verbunden ist, deren Achsen im wesentlichen aufwärts gerichtet sind, und daß zwischen den drei Gelenken zwei Arme (40) angeordnet sind.

3. Melkvorrichtung nach Anspruch 1 oder 2, dadurch gekennzeichnet, daß die Zitzenbecher (14) mit einem zentralen Teil (24) verbunden sind, das an dem Tier mittels eines Traggliedes (13) anzubringen ist.

4. Melkvorrichtung nach einem der vorhergehenden Ansprüche, dadurch gekennzeichnet, daß die Zitzenbecher (14) von einer hülle (12) umschlossen sind, die so zu plazieren ist, daß sie das Euter (30) des Tieres umgibt.

5. Melkvorrichtung nach einem der vorhergehenden Ansprüche, dadurch gekennzeichnet, daß der Durchmesser eines Zitzenbechers (14) mindestens die halbe Länge (höhe) des Zitzenbechers (14) beträgt.

6. Melkvorrichtung nach einem der vorhergehenden Ansprüche, dadurch gekennzeichnet, daß ein Zitzenbecher (14) an seiner Innenseite mit einem flexiblen Material (33), zum Beispiel Gummi oder Kunststoff, ausgekleidet ist, und daß die Auskleidung (33) an ihrer Innenseite eine oder mehrere aufwärts gerichtete Lamellen (43) aufweist.

7. Melkvorrichtung nach einem der vorhergehenden Ansprüche, dadurch gekennzeichnet, daß der obere Teil (23) eines Zitzenbechers (14) aus einem flexiblen Material besteht, und daß der obere Teil (23) mit einem oberen Ring (22) versehen ist, der eine unsymmetrische, an die Form des Euters (30) angepaßte Form hat und an einer Seite höher ist als an der anderen Seite.

**Revendications**

1. Machine à traire des animaux, tels que des vaches, comprenant des godets de trayons (14) dont chacun est muni d'un conduit à lait (39), dans laquelle le point de jonction entre un conduit à lait (39) et un godet de trayon (14) est disposé approximativement à la même hauteur où est située l'extrémité inférieure du trayon (31) dans le godet de trayon (14) pendant l'opération de traite, et dans laquelle l'extrémité du conduit (39) part du godet de trayon (14) sensiblement à l'horizontale, **caractérisée** en ce que les godets de trayons (14) sont mobiles par rapport à au moins un axe sensiblement vertical passant par une partie centrale et sont reliés de manière pivotante à ladite partie centrale (24), laquelle partie centrale est située sensiblement entre les godets de trayons (14).

2. Machine à traire selon la revendication 1, caractérisée en ce que chaque godet de trayon (14) est relié à la partie centrale (24) au moyen de trois pivots pouvant pivoter autour d'un axe dirigé sensiblement vers le haut, et de deux bras (40) disposés entre les trois pivots.

3. Machine à traire selon la revendication 1 ou 2, caractérisée en ce que les godets de trayons (14) sont reliés à une partie centrale (24) pouvant être attachée à l'animal au moyen d'un organe porteur (13).

4. Machine à traire selon l'une quelconque des revendications précédentes, caractérisée en ce que les godets de trayons (14) sont entourés d'une enveloppe (12) pouvant être placée autour du pis (30) de l'animal.

5. Machine à traire selon l'une quelconque des revendications précédentes, caractérisée en ce que le diamètre d'un godet de trayon (14) représente au moins la moitié de la longueur (hauteur) du godet de trayon (14).

6. Machine à traire selon l'une quelconque des revendications précédentes, caractérisée en ce qu'un godet de trayon (14) est revêtu sur son côté intérieur par une substance flexible (33), par exemple du caoutchouc ou une matière synthétique, ledit revêtement (33) étant muni sur son côté intérieur d'une ou plusieurs lamelles (43) dirigées vers le haut.

7. Machine à traire selon l'une quelconque des revendications précédentes, caractérisée en ce que la partie supérieure (23) d'un godet de trayon (14) consiste en une substance flexible, ladite partie supérieure (23) étant munie d'un rebord supérieur (22) ayant une forme disssymétrique adaptée à la forme du pis (30) et étant plus haut sur un côté que sur l'autre.

EP 0 347 954 B1

FIG. 1

FIG. 2

7

FIG. 3

FIG. 4

EP 0 347 954 B1

FIG. 5

FIG. 6

FIG. 7

FIG. 8

FIG. 9